# EUROPEAN PATENT APPLICATION

(11) **EP 4 800 767 A1**
(43) Date of publication of application: **02.09.2026**
(21) Application number: 24882619.0
(22) Date of filing: 26.08.2024
(51) Int. Cl.: H01M 4/525, H01M 4/505, H01M 10/052, C01G 53/00, H01M 4/02

(54) **CATHODE ACTIVE MATERIAL FOR LITHIUM SECONDARY BATTERY, MANUFACTURING METHOD THEREFOR, AND LITHIUM SECONDARY BATTERY COMPRISING SAME**

(30) Priority: 24.10.2023 KR 20230143053
(71) Applicant: Posco Future M Co., Ltd., Pohang-si, Gyeongsangbuk-do 37918 (KR)
(72) Inventor: SEO, Sunghwa, Pohang-si, Gyeongsangbuk-do 37918 (KR); LIM, Seokjae, Pohang-si, Gyeongsangbuk-do 37918 (KR); PARK, Jeonghyeon, Pohang-si, Gyeongsangbuk-do 37918 (KR); LEE, Hakbong, Pohang-si, Gyeongsangbuk-do 37918 (KR)
(74) Representative: Pfenning, Meinig & Partner mbB
(86) International application number: PCT/KR2024/012681
(87) International publication number: WO 2025/089590

(57) **Abstract**

The present invention relates to a positive electrode active material for a lithium secondary battery, which includes a single-particle lithium metal oxide containing from 50 mol% to 70 mol% of nickel based on a total mole of metals excluding lithium, and satisfies Equations 1 and 2 below. $3.0 μm \leq Dv 50 \leq 5.0 μm$ $Dv 50 - Dn 50 \leq 2.0 μm$

In Equations 1 and 2, Dv50 is a volume-based average particle diameter of the lithium metal oxide, and Dn50 is a number-based average particle diameter of the lithium metal oxide.

## Description

### [Technical Field]

The present invention relates to a positive electrode active material for a lithium secondary battery, a method for manufacturing the same, and a lithium secondary battery including the same. More particularly, the present invention relates to a method for preparing a single-particle type positive electrode active material for a lithium secondary battery, the positive electrode active material prepared thereby, and a lithium secondary battery including the same.

### [Background Art]

A lithium secondary battery generates electrical energy through oxidation and reduction reactions that occur when lithium ions are intercalated into and deintercalated from active materials positioned between a positive electrode and a negative electrode while an organic electrolyte or polymer electrolyte is present between the electrodes. Conventional positive electrode active materials include lithium cobalt oxide (LiCoO₂), lithium nickel oxide (LiNiO₂), lithium manganese oxides such as LiMnO₂ or LiMn₂O₄, and lithium iron phosphate compounds (LiFePO₄). Among them, lithium cobalt oxide has been widely used because of its high operating voltage and excellent capacity characteristics, and has been adopted as a high-voltage positive electrode active material. However, due to the rising cost and unstable supply of cobalt (Co), there are limitations to using LiCoO₂ as a large-scale power source, for example, in electric vehicles, thereby creating a strong need for alternative positive electrode active materials.

To address this need, nickel-cobalt-manganese-based lithium composite transition metal oxides (commonly known as NCM-based lithium composite oxides), in which part of the cobalt is substituted with nickel (Ni) and manganese (Mn), have been developed. However, conventional NCM-based active materials are generally secondary particles formed by the agglomeration of numerous primary particles, and therefore exhibit a large specific surface area. This leads to increased gas generation due to extensive contact with the electrolyte. Furthermore, the relatively weak mechanical strength of these secondary particles causes particle cracking during electrode rolling, ultimately degrading battery safety and cycle life.

Consequently, research has shifted toward developing single-particle positive electrode active materials, which can alleviate many of the aforementioned problems and significantly improve safety and cycle characteristics.

Nevertheless, even in single-particle systems, if calcination and crushing (deagglomeration) conditions are not properly controlled, the resulting particles may exhibit insufficient mechanical strength, leading to diminished performance improvements.

### [Disclosure of the Invention]

### [Technical Problem]

Accordingly, an objective of the present invention is to provide a single-particle lithium metal oxide having enhanced particle strength, such that battery safety and cycle life characteristics can be maximized. Another objective of the present invention is to provide a method for manufacturing such a positive electrode active material and a lithium secondary battery including the same.

### [Technical Solution]

According to one embodiment of the present invention, a positive electrode active material for a lithium secondary battery is provided, the positive electrode active material comprising a single-particle lithium metal oxide containing from 50 mol% to 70 mol% of nickel based on the total moles of metals excluding lithium, and satisfying Equations 1 and 2 below. $3.0 μm \leq Dv 50 \leq 5.0 μm$ $Dv 50 - Dn 50 \leq 2.0 μm$

In Equations 1 and 2, Dv50 is a volume-based average particle diameter of the lithium metal oxide, and Dn50 is a number-based average particle diameter of the lithium metal oxide.

The positive electrode active material may further satisfy Equation 3 below. $Dv 50 / Dn 50 \leq 2.0$

In Equation 3, Dv50 is a volume-based average particle diameter, and Dn50 is a number-based average particle diameter.

The Dn50 may be from 2.0 µm to 3.0 µm.

A Dn10 of the lithium metal oxide may be 1.0 µm or greater, wherein Dn10 refers to a particle diameter corresponding to 10% of the cumulative particle number.

The lithium metal oxide may be in a single-particle form.

A crystallite size of the lithium metal oxide may be 255 nm or greater.

A lattice constant of an a-axis of the lithium metal oxide may be 2.8751 Å or greater.

When compressed under a pressure of 1.7 tonf/cm², the lithium metal oxide may exhibit a fine-particle fraction of 3.0% or less for particles having a particle diameter of 1 µm or less.

The lithium metal oxide may be represented by Chemical Formula 1 below.

[Chemical Formula 1] Liₐ[NiₓCo_{y}Mn_{z}M_{w}]O₂

In Chemical Formula 1, 0.8 ≤ a ≤ 1.2, 0.5 ≤ x ≤ 0.7, 0 ≤ y ≤ 0.2, 0 ≤ z ≤ 0.4, 0 ≤ w ≤ 0.2, and x + y + z + w = 1; and M is at least one element selected from Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, and combinations thereof.

Another embodiment of the present invention provides a method for manufacturing a positive electrode active material for a lithium secondary battery, the method comprising: preparing a metal precursor containing from 50 mol% to 70 mol% of nickel based on a total moles of metals; mixing the metal precursor with a lithium raw material, followed by a first calcination and a second calcination to form a lithium metal oxide; and crushing the lithium metal oxide to form a single-particle lithium metal oxide, wherein the first calcination and the second calcination are performed in an air atmosphere.

The first calcination and the second calcination may each be independently performed at a temperature from 900°C to 960°C.

A duration of the first calcination may be shorter than a duration of the second calcination.

The first calcination may be performed for 2 hours to 6 hours.

The second calcination may be performed for 7 hours to 14 hours.

Another embodiment of the present invention provides a positive electrode for a lithium secondary battery comprising the positive electrode active material described above. Still another embodiment provides a lithium secondary battery comprising the positive electrode.

### [Effects of the Invention]

According to an embodiment of the present invention, the positive electrode active material includes a single-particle lithium metal oxide, and by appropriately controlling the volume-based average particle diameter and the number-based average particle diameter of the lithium metal oxide, the particle strength can be maximized. Accordingly, the safety and cycle life characteristics of the battery can be significantly improved.

### [Brief Description of the Drawings]

FIG. 1 is an SEM image of the positive electrode active material prepared in Example 1.
FIG. 2 is an SEM image of the positive electrode active material prepared in Example 2.
FIG. 3 is an SEM image of the positive electrode active material prepared in Example 3.
FIG. 4 is an SEM image of the positive electrode active material prepared in Comparative Example 1.
FIG. 5 is an SEM image of the positive electrode active material prepared in Comparative Example 2.
FIG. 6 is an SEM image of the positive electrode active material prepared in Comparative Example 3.

### [Detailed Description of Embodiments]

The terms "first," "second," and "third," and the like, as used herein, are employed merely to describe various components, regions, layers, and/or sections, and are not intended to be limiting. Such terms are used only to distinguish one component, region, layer, or section from another component, region, layer, or section. Accordingly, a first component, region, layer, or section described below may be referred to as a second component, region, layer, or section without departing from the scope of the present invention.

Technical terms used herein are merely for describing particular embodiments and are not intended to limit the present invention. Singular forms used herein are intended to include plural forms as well, unless the context clearly indicates otherwise. The term "comprising/including/containing" as used in the specification, specifies the presence of particular features, regions, integers, steps, operations, elements, and/or components, but does not preclude the presence or addition of other features, regions, integers, steps, operations, elements, and/or components.

When a component is described as being "on" or "over/above" another component, the component may be directly on or directly over the other component, or intervening components may be present therebetween. In contrast, when a component is described as being "directly on" or "directly over" another component, no intervening component is present.

Unless otherwise defined, all technical and scientific terms used herein have the same meaning as commonly understood by one of ordinary skill in the art to which the present invention pertains. Terms generally defined in standard dictionaries shall be interpreted as having a meaning consistent with the contextual meaning of the related art and the present disclosure, and shall not be interpreted in an idealized or overly formal sense unless expressly defined herein.

Unless otherwise specified, "%" refers to weight percent (wt%), and 1 ppm refers to 0.0001 wt%.

As used herein, the phrase "combinations thereof," when used in a Markush-type expression, refers to any mixture or combination of one or more selected elements of the group, and is intended to encompass any one or more of the elements recited in the group.

Hereinafter, embodiments of the present invention will be described in detail so that those skilled in the art may readily practice the invention. However, the present invention may be embodied in various different forms, and the embodiments described herein are not intended to limit the scope of the invention.

### 1. Positive Electrode Active Material

In one embodiment, a positive electrode active material for a lithium secondary battery comprises a single-particle lithium metal oxide. A single-particle active material has a smaller specific surface area than conventional secondary-particle materials, thereby reducing gas generation caused by parasitic reactions with an electrolyte. The single-particle morphology also provides higher mechanical strength, which suppresses particle fracture during roll-pressing, and reduces crack formation during repeated charge and discharge. Accordingly, the single-particle morphology offers superior cycle life and safety compared to secondary particles, while enabling a high-energy-density electrode structure.

As used herein, the term "single-particle" is employed to distinguish the lithium metal oxide particles of the present disclosure from conventional secondary particles formed by the aggregation of tens to hundreds of primary particles. The term "single-particle" refers collectively to (i) a particle composed of one primary particle and (ii) an aggregate composed of not more than 30 primary particles. By contrast, the term "secondary particle" refers to an agglomerate of tens to hundreds of primary particles physically or chemically bonded to one another without any intentional aggregation or assembly step, thereby forming a secondary structure.

As used herein, a "primary particle" refers to the smallest particle unit distinguishable as a single domain when the cross-section of the positive electrode active material is observed via scanning electron microscopy (SEM). A primary particle may consist of a single crystallite or multiple crystallites. A "crystallite" refers to a domain within a primary particle in which atoms form a lattice structure having a consistent crystallographic orientation.

In one embodiment, the lithium metal oxide contains from 50 mol% to 70 mol% of nickel based on a total mole of metals excluding lithium. In conventional nickel-cobalt-manganese (NCM) active materials, increasing the nickel content enhances the achievable capacity. However, excessive nickel content may cause thermal propagation issues, thereby degrading thermal safety, and also increases manufacturing cost due to the high price of nickel. Therefore, in the present disclosure, the nickel content is controlled within the above range to ensure desirable capacity and thermal safety, while also providing economic advantages.

If the firing and crushing conditions for preparing the single-particle lithium metal oxide are not properly controlled, the lithium metal oxide may contain an excessive amount of fine particles having very small particle diameters. Such fines promote parasitic reactions with the electrolyte, resulting in increased gas formation and deterioration of safety and cycle life.

Moreover, the inventors have confirmed that when a large number of fines are present, the particle strength of the lithium metal oxide decreases, and applying a certain pressure to the active material results in the formation of additional secondary fines. This phenomenon is closely related to the pressure applied during an electrode roll-pressing process. Therefore, fines present immediately after synthesis can generate further fines during electrode fabrication, accelerating deterioration in safety and cycle life.

Through extensive investigation aimed at maximizing the particle strength of single-particle lithium metal oxides, the inventors have developed the present disclosure. The inventors have found that an optimized particle-size distribution-achieved by precisely controlling the calcination and crushing conditions-suppresses the generation of fines and significantly enhances the mechanical robustness and electrochemical performance of the single-particle active material. These processing conditions are described in further detail in the manufacturing method section below.

In one embodiment, the positive electrode active material for a lithium secondary battery satisfies Equation 1 below. $3.0 μm \leq Dv 50 \leq 5.0 μm$

More specifically, Dv50 may be 3.5 µm or greater, or 3.8 µm or greater, and may be 4.5 µm or less.

In another embodiment, the positive electrode active material satisfies Equation 2 below. $Dv 50 - Dn 50 \leq 2.0 μm$

More specifically, the value of Dv50 - Dn50 may be from 1.5 µm to 2.0 µm.

In still another embodiment, the positive electrode active material satisfies Equation 3 below. $Dv 50 / Dn 50 \leq 2.0$

In Equation 3, Dv50 is a volume-based average particle diameter of the lithium metal oxide, and Dn50 is a number-based average particle diameter of the lithium metal oxide. More specifically, the value of Dv50 / Dn50 may be from 1.6 to 2.0.

In Equations 1 through 3, Dv50 represents the volume-based average particle diameter of the lithium metal oxide, and Dn50 represents the number-based average particle diameter of the lithium metal oxide. More specifically, the volume-based average particle diameter (Dv50) may be defined as the particle diameter corresponding to 50% of a cumulative volume-based distribution, and the number-based average particle diameter (Dn50) may be defined as the particle diameter corresponding to 50% of a cumulative number-based distribution. Dv50 and Dn50 may be measured using, for example, a laser diffraction method.

Satisfying Equation 1 allows the positive electrode active material to simultaneously achieve desirable electrochemical characteristics, such as high electrode density, capacity, and output characteristics. If Dv50 is too small, the density of the positive electrode active material becomes undesirably low, reducing the electrode density and ultimately lowering the energy density of the electrode. Conversely, if Dv50 is too large, lithium-ion mobility deteriorates, resulting in decreased capacity and output. Accordingly, when Equation 1 is satisfied, both electrode density and capacity characteristics can be improved, enabling a high-energy-density electrode.

Satisfying Equation 2 or Equation 3 allows the positive electrode active material to maximize safety and cycle life. The difference between Dv50 and Dn50, or the ratio Dv50 / Dn50, represents the proportion of fines within the lithium metal oxide. In general, Dv50 is larger than Dn50. As Dn50 approaches Dv50, the proportion of fines decreases. Therefore, when Equation 2 or Equation 3 is satisfied, the amount of fines is reduced, and safety and cycle-life characteristics of the battery are improved for the reasons described above.

More specifically, Dn50 may be from 2.0 µm to 3.0 µm, and more specifically from 2.0 µm to 2.51 µm.

In addition, the Dn10 value of the lithium metal oxide may be 1.0 µm or greater, and more specifically from 1.0 µm to 1.435 µm. A sufficiently high Dn10 reduces the proportion of fines within the lithium metal oxide, thereby improving battery safety and cycle-life characteristics for the reasons described above. The number-based particle diameter Dn10 corresponds to 10% of a cumulative number-based distribution, and may be measured using a laser diffraction method.

The lithium metal oxide may be in a single-particle form. As used herein, the term "single-particle" refers to a particle composed of one primary particle, and the term "single-particle form" refers to a state in which 90% or more of all lithium metal oxide particles are composed of a single primary particle. A single-particle morphology further enhances particle strength, and therefore provides additional improvements in battery safety and cycle-life performance.

The lithium metal oxide may have an average crystallite size of 255 nm or greater, and more specifically 260 nm or greater. A sufficiently large crystallite size further increases particle strength, thereby delivering the improvements in safety and cycle-life characteristics described above. As used herein, crystallite size can be estimated using peak broadening in X-ray diffraction (XRD), and may be quantified using the Scherrer equation. The crystallite size can be controlled by precisely adjusting the calcination conditions during preparation of the active material.

The lithium metal oxide may have an a-axis lattice constant of 2.8751 Å or greater. The a-axis lattice constant tends to increase as the crystallite size increases. A sufficiently large lattice constant reinforces particle strength, thereby further improving battery safety and cycle-life characteristics. The lattice constant may also be determined from XRD peak broadening and calculated via the Scherrer equation, and can likewise be controlled through careful adjustment of calcination conditions.

Accordingly, the lithium metal oxide according to an embodiment of the present invention may exhibit maximized particle strength such that, when subjected to a pressing pressure of 1.7 tonf/cm², a fraction of fines having a particle diameter of 1 µm or less is 3.0% or less.

This property may be measured more specifically as follows.

A mold having a diameter of 1.3 cm is charged with 3.00 g of a sample of the positive electrode active material, and the sample is pressed under a pressure of 1.7 tonf/cm². The resulting pressed pellet is ground using a mortar to break apart agglomerated particles. Then, 0.01 g of the ground active material is added to 1 mL of a 10 wt% (NaPO₃)₆ aqueous dispersion medium and subjected to ultrasonic treatment for 1 minute. Thereafter, the particle-size distribution is measured using a Malvern MS3000 analyzer, and the volume percentage of particles having a particle diameter of 1 µm or less is determined as the fines fraction.

The lithium metal oxide may be represented more specifically by Chemical Formula 1 below.

[Chemical Formula 1] Liₐ[NiₓCo_{y}Mn_{z}M_{w}]O₂

In Chemical Formula 1, 0.8 ≤ a ≤ 1.2, 0.5 ≤ x ≤ 0.7, 0 ≤ y ≤ 0.2, 0 ≤ z ≤ 0.4, 0 ≤ w ≤ 0.2, and x + y + z + w = 1, and M is at least one element selected from Zr, Al, B, Y, Mg, Ti, Nb, W, Sc, Si, V, Fe, Mo, Ce, Hf, Ta, La, Sr, Sn, Sb, Zn, Cu, Ge, Ru, Ir, and combinations thereof.

In the lithium transition metal oxide of Chemical Formula 1, lithium may be included in an amount corresponding to 0.8 ≤ a ≤ 1.2. If the value of *a* is too low, the capacity may decrease. If *a* is too high, the strength of the calcined active material may become excessively high, making pulverization difficult, and increasing lithium by-products may lead to increased gas generation. Considering the balance between capacity enhancement and sinterability during calcination, lithium is more preferably present in an amount of 0.9 ≤ a ≤ 1.1.

In the lithium transition metal oxide of Chemical Formula 1, nickel may be included in an amount corresponding to 0.5 ≤ x ≤ 0.7. If the nickel content is too low, achieving a high capacity becomes difficult, whereas if the nickel content is too high, structural stability may decrease, battery cycle life and thermal safety may deteriorate, and manufacturing cost may increase.

Cobalt may be included in an amount corresponding to 0 ≤ y ≤ 0.2, or more specifically 0.05 ≤ y ≤ 0.2. If the cobalt content is too low, achieving both sufficient rate capability and high powder density becomes difficult. If the cobalt content is too high, overall material cost increases and reversible capacity may decrease.

Manganese may be included in an amount corresponding to 0 ≤ z ≤ 0.4, or more specifically 0.1 ≤ z ≤ 0.4. If the manganese content is too low, production cost may increase and material stability may decline. If the manganese content is too high, capacity and output characteristics of the battery may decrease.

M may be included in an amount corresponding to 0 ≤ w ≤ 0.2, and may be selected from the doping elements listed above.

### 2. Method for Manufacturing the Positive Electrode Active Material

The particle-size-related properties of the positive electrode active material according to an embodiment of the present invention, including the value of Dv50 - Dn50, may be achieved by precisely controlling the calcination and crushing conditions. A method for manufacturing the positive electrode active material will now be described in detail.

According to another embodiment of the present invention, a method for manufacturing a positive electrode active material for a lithium secondary battery comprises: preparing a metal precursor containing from 50 mol% to 70 mol% of nickel based on a total moles of metals; mixing the metal precursor with a lithium raw material and performing a first calcination and a second calcination to form a lithium metal oxide; and crushing the lithium metal oxide to form a single-particle lithium metal oxide, wherein the first calcination and the second calcination are performed in an air atmosphere.

A step-by-step description of the manufacturing method according to this embodiment is provided below.

First, a metal precursor containing 50 mol% to 70 mol% of nickel based on a total mole of metals is prepared. The metal precursor may be, for example, a metal hydroxide.

The metal hydroxide may be produced by adding a chelating-agent-containing solution and a pH-adjusting-agent-containing solution to a transition-metal-containing solution that includes a nickel raw material and, optionally, a cobalt raw material or a manganese raw material, followed by a coprecipitation reaction.

The nickel raw material is not particularly limited so long as it is conventionally used for preparing precursors for positive electrode active materials. For example, the nickel raw material may be a nickel-containing sulfate, acetate, nitrate, halide, sulfide, hydroxide, oxide, or oxyhydroxide, including, for instance, NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, nickel fatty-acid salts, nickel halides, or combinations thereof.

The cobalt raw material is also not particularly limited, and may be a cobalt-containing sulfate, acetate, nitrate, halide, sulfide, hydroxide, oxide, or oxyhydroxide, including CoSO₄, CoSO₄·7H₂O, Co(OH)₂, CoOOH, Co(OCOCH₃)₂·4H₂O, Co(NO₃)₂·6H₂O, or combinations thereof.

Similarly, the manganese raw material may be selected from manganese-containing sulfates, acetates, nitrates, halides, sulfides, hydroxides, oxides, oxyhydroxides, or combinations thereof, including MnSO₄, MnCO₃, Mn(NO₃)₂, manganese acetate, dicarboxylate manganese salts, manganese citrates, manganese fatty-acid salts, Mn₂O₃, MnO₂, Mn₃O₄, manganese oxyhydroxides, manganese chlorides, or combinations thereof.

The transition-metal-containing solution may be prepared by dissolving the nickel raw material and, optionally, the cobalt or manganese raw material in a solvent such as water or a mixture of water and a water-miscible organic solvent (e.g., alcohols).

The chelating-agent-containing solution serves to form chelate complexes, and may include NH₃, NH₄OH, (NH₄)₂SO₄, NH₄NO₃, NH₄Cl, CH₃COONH₄, NH₄CO₃, or combinations thereof. The chelating agent may be provided as an aqueous solution, using water or a mixture of water and a water-miscible organic solvent.

The pH-adjusting-agent-containing solution serves as a precipitant or pH-control solution, and may include hydroxides of alkali metals or alkaline-earth metals such as NaOH, KOH, or Ca(OH)₂, their hydrates, or combinations thereof. The pH-adjusting-agent-containing solution may also be used as an aqueous solution. It may be added in an amount sufficient to adjust the pH of the reaction solution to 11 to 13.

The coprecipitation reaction may be performed under an inert atmosphere such as nitrogen or argon, at 30°C to 70°C, and at pH 11 to 13.

Through this process, particles of nickel-(cobalt-manganese-doping-element) hydroxide precipitate in the reaction solution. The precipitated precursor particles may be collected, washed, and dried by conventional methods. The resulting precursor may be a secondary particle formed by agglomeration of primary particles.

The molar ratios of nickel, cobalt, and manganese in the precursor may be controlled by adjusting the concentrations of the respective raw materials. Accordingly, the nickel content may be from 50 mol% to 70 mol% based on the total moles of metals, as noted above.

Next, the metal precursor and the lithium raw material are mixed, and a first calcination and a second calcination are performed to form the lithium metal oxide.

In conventional processes, a single long-duration, high-temperature calcination has typically been employed to form a single-particle lithium metal oxide. However, such an approach tends to cause over-sintering, resulting in nickel cation mixing and the formation of rocksalt impurity phases, which lead to deterioration of the electrochemical performance of the active material. In contrast, the manufacturing method according to the present invention divides the calcination into two stages, thereby preventing such issues, improving particle strength, and increasing production throughput.

The first calcination and the second calcination are both performed in an air atmosphere. When the calcination is carried out in an air atmosphere rather than in a pure oxygen (O₂) atmosphere, the amount of fines is reduced, the Dn50 value becomes larger, and particle-size-related properties including Dv50 - Dn50 fall within the ranges defined in the present invention, thereby improving particle strength. The inventors believe that, during calcination, particle growth may occur either by agglomeration between particles or by enhancement of crystallinity in individual particles, and that such particle-growth mechanisms differ depending on the CO₂ and O₂ partial pressures present in the ambient atmosphere.

The air atmosphere may more specifically be an atmosphere in which the oxygen partial pressure is 21% or less.

In addition, each of the first calcination and the second calcination may independently be performed at a temperature of 900°C to 960°C. If the temperature is too low, the single-particle lithium metal oxide may not be sufficiently formed, and an increased amount of fines may reduce the Dn50 value, resulting in inferior particle strength. If the temperature is too high, over-sintering may occur, causing degradation in electrochemical properties such as capacity and output, and requiring larger jet-mill crushing pressure, which in turn increases fines and lowers the Dn50 value, thereby degrading particle strength.

Further, a duration of the first calcination may be shorter than a duration of the second calcination. When the first calcination time is shorter than the second calcination time, the amount of fines is reduced, the Dn50 value becomes larger, and particle-size-related properties including Dv50 - Dn50 fall within the ranges defined in the present invention, thereby improving particle strength.

The first calcination may more specifically be performed for 2 to 6 hours. If the first calcination is too short, increased fines may reduce the Dn50 value and degrade particle strength. If the first calcination is too long, two rounds of jet-mill crushing may be required, and the resulting increased fines may reduce the Dn50 value and degrade particle strength.

The second calcination may more specifically be performed for 7 to 14 hours. If the second calcination is too short, the amount of under-grown particles may increase, reducing the Dn50 value and degrading particle strength. If the second calcination is too long, jet-mill pressure required for crushing over-sintered particles increases, which increases fines, thereby reducing the Dn50 value and degrading particle strength.

Next, the lithium metal oxide is crushed to form a single-particle lithium metal oxide.

The crushing may be divided into a first crushing and a second crushing. By dividing the crushing process into two stages, agglomerated secondary particles may be effectively loosened to form single-particle structures.

The first crushing may be performed using any crushing equipment commonly used in the art. For example, the first crushing may be carried out using a rotor mill, although it is not limited thereto.

The first crushing may be performed at a stirring speed of 15,000 to 20,000 rpm. When the stirring speed during the first crushing falls within this range, an appropriate level of force is applied to sufficiently loosen agglomerates while suppressing excessive formation of fines, thereby allowing properties such as Dn50 and Dv50 - Dn50 to fall within the ranges defined in the present invention.

The second crushing may be performed using any crushing equipment commonly used in the art. For example, the second crushing may be carried out using a jet mill, although it is not limited thereto.

The second crushing may be controlled such that the volume-based average particle diameter (Dv50) of the lithium metal oxide becomes 3.0 µm to 5.0 µm. When the second crushing is controlled to achieve a Dv50 within this range, particle-size-related properties such as Dn50 and Dv50 - Dn50 may fall within the ranges defined in the present invention.

The second crushing may be carried out at a crushing pressure of 2.1 to 5.4 bar. When the crushing pressure falls within this range, the crushing force is appropriate to suppress excessive production of fines, enabling Dn50, Dv50 - Dn50, and other properties to fall within the ranges defined in the present invention.

Through the sequence of manufacturing steps described above, a single-particle lithium metal oxide according to the present invention may be formed, and the resulting lithium metal oxide may satisfy the particle-size-related property ranges including the value of Dv50 - Dn50.

### 3. Positive Electrode and Lithium Secondary Battery

According to another embodiment of the present invention, a positive electrode for a lithium secondary battery including the above-described positive electrode active material is provided. More specifically, the positive electrode may include a positive electrode current collector and a positive electrode active material layer disposed on the positive electrode current collector, the positive electrode active material layer including the above-described positive electrode active material.

The positive electrode current collector is not particularly limited so long as it has electrical conductivity and does not induce chemical changes in the battery. Examples include stainless steel, aluminum, nickel, titanium, baked carbon, or materials obtained by surface-treating aluminum or stainless steel with carbon, nickel, titanium, silver, or the like. The positive electrode current collector may typically have a thickness from 3 µm to 500 µm, and fine surface irregularities may be formed on the surface of the current collector to enhance adhesion with the positive electrode active material. Examples of suitable forms include films, sheets, foils, nets, porous bodies, foams, and nonwoven fabrics.

The positive electrode active material layer may include the above-described positive electrode active material together with a binder and/or a conductive agent. The binder serves to improve adhesion between the active material particles and between the active material and the current collector. Examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, and various copolymers thereof. One or more of these may be used, and the binder may be included in an amount from 1 wt% to 30 wt% based on the total weight of the positive electrode active material layer.

The conductive agent is used to impart electrical conductivity to the electrode and is not particularly limited so long as it does not induce chemical changes in the battery and provides electronic conductivity. Examples include graphite such as natural graphite and artificial graphite; carbonaceous materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; and conductive polymers such as polyphenylene derivatives. One or more of these may be used, and the conductive agent may be included in an amount from 1 wt% to 30 wt% based on the total weight of the positive electrode active material layer.

The positive electrode may be manufactured according to conventional positive electrode fabrication methods, except that the above-described positive electrode active material is used.

Specifically, the positive electrode may be manufactured by coating, on the positive electrode current collector, a composition for forming a positive electrode active material layer, the composition including the above-described positive electrode active material and, as necessary, a binder, a conductive agent, and/or a solvent, followed by drying and roll-pressing. In this case, the types and amounts of the positive electrode active material, binder, and conductive agent are the same as those previously described.

The solvent may be any solvent commonly used in the relevant technical field, and examples include dimethyl sulfoxide (DMSO), isopropyl alcohol, N-methylpyrrolidone (NMP), acetone, and water. One or a mixture of two or more of these solvents may be used. The amount of solvent used only needs to be sufficient to dissolve or disperse the positive electrode active material, binder, and conductive agent, and to provide a viscosity that enables excellent coating uniformity during the formation of the positive electrode.

Alternatively, the positive electrode may be manufactured by casting the composition for forming the positive electrode active material layer on a separate support, peeling off a film obtained therefrom, and laminating the film onto the positive electrode current collector.

Another embodiment of the present invention provides a lithium secondary battery including the above-described positive electrode.

More specifically, the lithium secondary battery may include a positive electrode, a negative electrode, a separator, and an electrolyte. The lithium secondary battery may further include a battery case that accommodates an electrode assembly including the positive electrode, the negative electrode, and the separator, and a sealing member that seals the battery case.

The negative electrode may include a negative electrode current collector and a negative electrode active material layer disposed on the negative electrode current collector.

The negative electrode current collector is not particularly limited so long as it has high electrical conductivity and does not induce chemical changes in the battery. Examples of usable negative electrode current collectors include copper, stainless steel, aluminum, nickel, titanium, calcined carbon, carbon-, nickel-, titanium-, or silver-coated copper or stainless steel, and aluminum-cadmium alloys. The negative electrode current collector may typically have a thickness of 3 µm to 500 µm, and, similar to the positive electrode current collector, fine surface roughness may be formed on the surface to enhance adhesion of the negative electrode active material. Examples of usable forms include films, sheets, foils, nets, porous bodies, foams, and nonwoven fabrics.

The negative electrode active material layer may include a negative electrode active material and may further include, as necessary, a binder and a conductive agent. For example, the negative electrode may be manufactured by coating, on the negative electrode current collector, a composition for forming the negative electrode active material layer, the composition including the negative electrode active material and optionally a binder and a conductive agent, followed by drying; or by casting the composition on a separate support to form a film, peeling the film off, and laminating the film onto the negative electrode current collector.

As the negative electrode active material, compounds capable of reversibly intercalating and deintercalating lithium may be used. Examples include carbon-based materials such as artificial graphite, natural graphite, graphitized carbon fibers, and amorphous carbon; metal-based materials capable of alloying with lithium such as Si, Al, Sn, Pb, Zn, Bi, In, Mg, Ga, Cd, Si alloys, Sn alloys, or Al alloys; metal oxides capable of lithium doping and dedoping such as SiOβ (0 < β < 2), SnO₂, vanadium oxide, and lithium vanadium oxide; and composites including the metal-based compounds and carbon-based materials, such as Si-C composites and Sn-C composites. A lithium metal thin film may also be used as the negative electrode active material. The carbon materials may include low-crystalline and high-crystalline carbon materials. Examples of low-crystalline carbon materials include soft carbon and hard carbon, and examples of high-crystalline carbon materials include amorphous, plate-type, flake-type, spherical, or fibrous natural or artificial graphite, kish graphite, pyrolytic carbon, mesophase pitch-based carbon fibers, meso-carbon microbeads, mesophase pitches, and petroleum or coal tar pitch-derived cokes.

The binder and the conductive agent may be the same as those described above with respect to the positive electrode.

The separator separates the negative electrode from the positive electrode and provides a pathway for lithium-ion transport. Any separator commonly used in lithium secondary batteries may be employed without particular limitation, and it is particularly desirable that the separator exhibit low resistance to ion migration and excellent electrolyte wettability. Specifically, porous polymer films may be used, for example, porous polymer films made of polyolefin-based polymers such as ethylene homopolymers, propylene homopolymers, ethylene/butene copolymers, ethylene/hexene copolymers, and ethylene/methacrylate copolymers, or laminated structures of two or more of these films. Conventional porous nonwoven fabrics, such as nonwoven fabrics composed of high-melting-point glass fibers or polyethylene terephthalate fibers, may also be used. In addition, in order to secure thermal resistance or mechanical strength, coated separators containing ceramic components or polymer materials may be used, and such separators may be employed in either a single-layer or multi-layer configuration.

The electrolyte may be any electrolyte usable in the manufacture of lithium secondary batteries, including organic liquid electrolytes, inorganic liquid electrolytes, solid polymer electrolytes, gel-type polymer electrolytes, solid inorganic electrolytes, or molten inorganic electrolytes, without limitation.

More specifically, the organic liquid electrolyte may include an organic solvent and a lithium salt.

The organic solvent may be any medium capable of allowing migration of ions involved in the electrochemical reactions of the battery. Examples include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitriles of the formula R-CN (where R is a C₂-C₂₀ linear, branched, or cyclic hydrocarbon group optionally containing an unsaturated ring or ether bond); amides such as dimethylformamide; dioxolanes such as 1,3-dioxolane; and sulfolane compounds. Among these, carbonate-based solvents are preferred. A mixture of cyclic carbonates (e.g., EC or PC), which have high ionic conductivity and high dielectric constant, and linear carbonates (e.g., EMC, DMC, or DEC), which have low viscosity, is more preferable. The cyclic carbonate and the linear carbonate may be mixed at a volume ratio of about 1:1 to 1:9 to achieve excellent electrolyte performance.

The lithium salt may be any compound capable of supplying lithium ions in the lithium secondary battery, without particular limitation. Specific examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The concentration of the lithium salt is preferably from 0.1 M to 2.0 M. When the concentration is within this range, the electrolyte exhibits suitable conductivity and viscosity, enabling excellent ionic transport.

The electrolyte may further include one or more additives for improving battery cycle life, suppressing capacity fading, or enhancing discharge capacity. Examples include halogenated alkylene carbonates such as difluoroethylene carbonate; pyridine; triethyl phosphite; triethanolamine; cyclic ethers; ethylenediamine; glymes (e.g., n-glyme); hexamethylphosphoramide; nitrobenzene derivatives; sulfur; quinone imine dyes; N-substituted oxazolidinones; N,N-substituted imidazolidines; ethylene glycol dialkyl ethers; ammonium salts; pyrrole; 2-methoxy ethanol; and aluminum trichloride. The additive may be present in an amount of 0.1 wt% to 5 wt% based on the total weight of the electrolyte.

As described above, a lithium secondary battery including the positive electrode active material of the present invention exhibits excellent discharge capacity, output characteristics, and capacity retention, and is therefore useful for portable devices such as mobile phones, laptop computers, and digital cameras, as well as for electric-vehicle applications such as hybrid electric vehicles (HEVs).

Accordingly, another embodiment of the present invention provides a battery module including the lithium secondary battery as a unit cell, and a battery pack including the battery module.

The battery module or battery pack may be used as a power source for medium- and large-sized devices, including power tools; electric vehicles (EVs), hybrid electric vehicles (HEVs), and plug-in hybrid electric vehicles (PHEVs); and energy storage systems.

The embodiments of the present invention are described in further detail below through Examples. However, the following Examples are merely exemplary embodiments of the present invention, and the present invention is not limited thereto.

### Example 1

### (1) Preparation of Positive Electrode Active Material

(Mixing step) A precursor having a composition of Ni_{0.6}Co_{0.1}Mn_{0.3}(OH)₂ was prepared, and LiOH·H₂O was added to the precursor in an amount such that a molar ratio (Li/M) of lithium to the transition metals of the precursor became 1.07. The mixture was mechanically blended in a mixer to form a homogeneous mixture.

(First calcination) The mixture was then heated under an air atmosphere having an oxygen partial pressure of 21%, and the temperature was increased to 930°C. The mixture was held at 930°C for 4 hours for a first calcination, followed by natural cooling. The first-calcined product was subsequently crushed using a rotor mill.

(Second calcination) The crushed first-calcined product was then subjected to a second calcination by maintaining the material at 930°C for 12 hours under an air atmosphere having an oxygen partial pressure of 21%, followed by natural cooling, thereby forming a lithium metal oxide. Both the first calcination and the second calcination were carried out inside a laboratory box furnace.

(First crushing) The resulting lithium metal oxide was crushed at a stirring speed of 18,000 rpm using a rotor mill.

(Second crushing) A second crushing was performed using a jet mill at a milling pressure of 4.0 bar, thereby forming a single-particle lithium transition metal oxide. The final lithium transition metal oxide had a composition of Li_{1.07}Ni_{0.6}Co_{0.1}Mn_{0.3}O₂.

### (2) Fabrication of Lithium Secondary Battery

A slurry for electrode fabrication was prepared by mixing the positive electrode active material, a conductive agent (carbon black, Denka Black), and a binder (PVDF, KF9700) in a weight ratio of 95.0 : 2.0 : 3.0. N-methyl-2-pyrrolidone (NMP) was added to adjust the viscosity such that the solid content became approximately 60 wt%.

The slurry was coated onto a 20-µm-thick aluminum foil using a doctor blade, followed by drying and roll-pressing. The electrode loading was 16.0 mg/cm² and the roll-pressed density (25°C, 20 kN) was 3.5 g/cm³.

The electrolyte used was 1 M LiPF₆ dissolved in EC:DMC:DEC = 1:2:1 (vol%), with 2.0 vol% vinylene carbonate (VC) added based on the total electrolyte volume. A coin cell was assembled using a polypropylene separator and a lithium metal negative electrode (400 µm, Niba Metal).

### Example 2

Example 2 was carried out in the same manner as Example 1, except that the first calcination time was 4 hours and the second calcination time was 10 hours.

### Example 3

Example 3 was carried out in the same manner as Example 1, except that the first calcination time was 4 hours and the second calcination time was 8 hours.

### Example 4

Example 4 was carried out in the same manner as Example 1, except that:
- the first calcination time was 4 hours,
- the second calcination time was 10 hours, and
- both the first and second calcinations were performed using an RHK furnace.

### Example 5

Example 5 was carried out in the same manner as Example 1, except that:
- the first calcination time was 4 hours,
- the second calcination time was 9 hours, and
- both the first and second calcinations were performed using an RHK furnace.

### Example 6

Example 6 was carried out in the same manner as Example 1, except that:
- the first calcination time was 4 hours,
- the second calcination time was 8 hours, and
- both the first and second calcinations were performed using an RHK furnace.

### Comparative Examples

### Comparative Example 1

Comparative Example 1 was carried out in the same manner as Example 1, except that:
- the calcination was not divided into a first calcination and a second calcination,
- a single calcination was performed for 14 hours, and
- the calcination was performed using an RHK furnace.

### Comparative Example 2

Comparative Example 2 was carried out in the same manner as Example 1, except that:
- the first calcination time was 4 hours,
- the second calcination time was 10 hours, and
- both the first and second calcinations were performed under an oxygen (O₂) atmosphere having an oxygen partial pressure of 96% or higher.

### Comparative Example 3

Comparative Example 3 was carried out in the same manner as Example 1, except that:
- the first calcination time was 4 hours,
- the second calcination time was 11 hours, and
- both the first and second calcinations were performed under an oxygen (O₂) atmosphere having an oxygen partial pressure of 96% or higher.

Table 1 below summarizes the process conditions for the Examples and Comparative Examples.

**[Table 1]**

| Sample | First Calcination | | | Second Calcination | | | Furnace |
|---|---|---|---|---|---|---|---|
| | Temperature (°C) | Time (h) | Atmosphere | Temperature (°C) | Time (h) | Atmosphere | |
| Ex. 1 | 930 | 4 | Air | 930 | 12 | Air | Lab box |
| Ex. 2 | 930 | 4 | Air | 930 | 10 | Air | Lab box |
| Ex. 3 | 930 | 4 | Air | 930 | 8 | Air | Lab box |
| Ex. 4 | 930 | 4 | Air | 930 | 10 | Air | RHK |
| Ex. 5 | 930 | 4 | Air | 930 | 9 | Air | RHK |
| Ex. 6 | 930 | 4 | Air | 930 | 8 | Air | RHK |
| C-Ex. 1 | 930 | 14 | Air | X | X | X | RHK |
| C-Ex.2 | 930 | 4 | O₂ | 930 | 10 | O₂ | Lab box |
| C-Ex.3 | 930 | 4 | O₂ | 930 | 11 | O₂ | Lab box |

### Experimental Example 1: Evaluation of SEM Images of the Positive Electrode Active Material

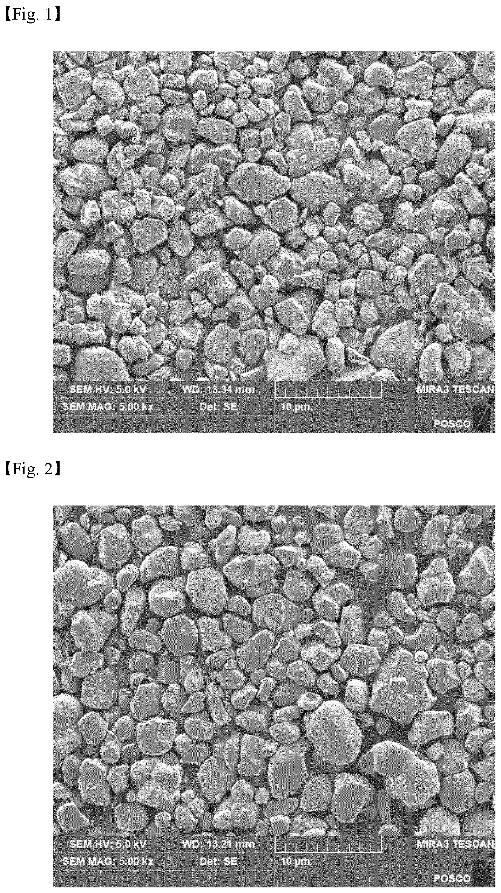

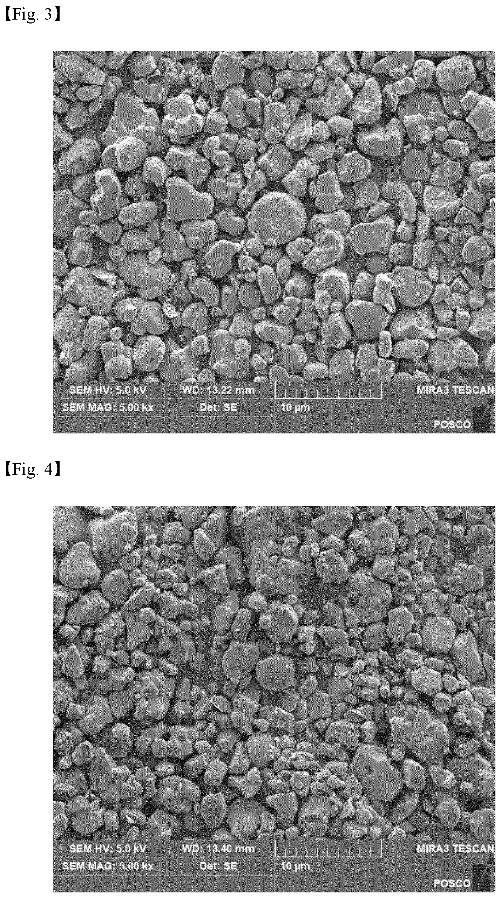

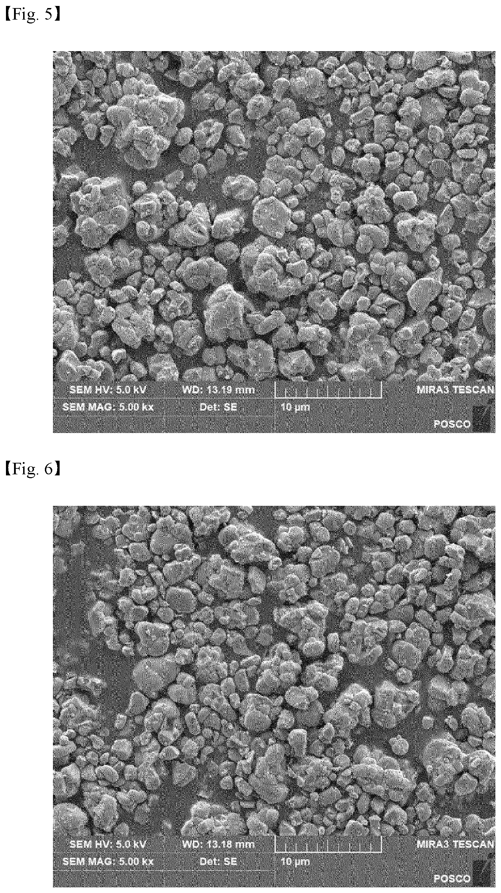

SEM (scanning electron microscopy) images of the positive electrode active materials prepared in accordance with Examples 1 to 3 and Comparative Examples 1 to 3 were observed, and the results are shown in FIGS. 1 to 6, respectively.

Referring to FIGS. 1 to 6, it was confirmed that the positive electrode active materials of the Examples and Comparative Examples were in a single-particle form.

### Experimental Example 2: Evaluation of Physical Properties of the Positive Electrode Active Material

### (1) Evaluation of Dv50, Dn50, Dv50/Dn50, Dv50 - Dn50, and Dn10

The volume-based average particle diameter (Dv50) was measured by determining a particle diameter corresponding to 50% of a cumulative volume distribution using a laser diffraction method.

In addition, number-based particle diameters corresponding to 50% and 10% of a cumulative number distribution were measured to determine the number-based average particle diameter (Dn50) and Dn10, respectively.

Subsequently, Dv50/Dn50 and Dv50 - Dn50 were calculated on the basis thereof.

### (2) Evaluation of Fine Particle Fraction (≤ 1 µm) Under a Pressing Pressure of 1.7 tonf/cm²

A 3.00 g sample of the positive electrode active material was introduced into a mold having a diameter of 1.3 cm and pressed under a pressure of 1.7 tonf/cm².

The resulting pellet-shaped active material was pulverized in a mortar to break aggregated particles.

Then, 0.01 g of the positive electrode active material was added to 1 mL of a 10 wt% (NaPO₃)₆ dispersant solution, followed by ultrasonication for 1 minute.

A particle size analysis was subsequently performed using a Malvern MS3000 apparatus to measure a volume percentage of fine particles having a particle diameter of 1 µm or less.

### (3) Evaluation of Average Crystallite Size and a-Axis Lattice Constant

An average crystallite size and an a-axis lattice constant were evaluated by applying peak broadening analysis of XRD data together with the Scherrer equation.

**[Table 2]**

| Sample | Dv50 | Dn50 | Dv50-Dn50 | Dv50/Dn50 | Dn10 | Fraction of fines (≤1 | Average | a-axis lattice |
|---|---|---|---|---|---|---|---|---|
| | (µm) | (µm) | (µm) | | (µm) | µm) under a pressing pressure of 1.7 tonf/cm² (%) | crystallite size (nm) | constant (Å) |
| Ex. 1 | 4.12 | 2.82 | 1.3 | 1.461 | 1.740 | 1.3 | 278 | 2.8778 |
| Ex. 2 | 3.99 | 2.8 | 1.19 | 1.425 | 1.750 | 1.5 | 288 | 2.8752 |
| Ex. 3 | 3.86 | 2.52 | 1.34 | 1.532 | 1.450 | 2 | 276 | 2.8752 |
| Ex. 4 | 4.05 | 2.51 | 1.54 | 1.614 | 1.420 | 2.3 | 283 | 2.8765 |
| Ex. 5 | 3.97 | 2.38 | 1.59 | 1.668 | 1.290 | 2.4 | 280 | 2.8767 |
| Ex. 6 | 3.88 | 2.27 | 1.61 | 1.709 | 1.200 | 2.7 | 269 | 2.8770 |
| C-Ex. 1 | 3.93 | 1.65 | 2.28 | 2.382 | 0.960 | 4.4 | 247 | 2.8748 |
| C-Ex.2 | 4.03 | 0.89 | 3.14 | 4.528 | 0.540 | 6.3 | 212 | 2.8750 |
| C-Ex.3 | 3.99 | 0.9 | 3.09 | 4.433 | 0.540 | 6.6 | 215 | 2.8749 |

Referring to Table 2, it was confirmed that in the case of the Examples in which the calcination and crushing conditions were properly controlled, the amount of fines was reduced such that the Dn50 value sufficiently increased, and consequently, the overall particle-size-related properties, including the Dv50 - Dn50 value, were obtained within the ranges defined according to the present invention. It was also confirmed that both the average crystallite size and the a-axis lattice constant were significantly increased. As a result, the fraction of fines having a particle diameter of 1 µm or less under a pressing pressure of 1.7 tonf/cm² was 3.0% or less, demonstrating a markedly enhanced particle strength.

In contrast, in Comparative Example 1, in which calcination was not divided into a first calcination and a second calcination and instead a single long-duration calcination was performed, the Dn50 value decreased, and the overall properties, including the Dv50 - Dn50 value, deviated from the ranges defined according to the present invention. It was further confirmed that the average crystallite size and the a-axis lattice constant were smaller than those of the Examples. As a result, the fraction of fines under a pressing pressure of 1.7 tonf/cm² increased to about 4.4%, showing inferior particle strength compared to the Examples.

Furthermore, in Comparative Examples 2 and 3, in which the first and second calcinations were performed under an oxygen (O₂) atmosphere rather than an air atmosphere, the Dn50 values decreased significantly, and the overall particle-size-related properties, including the Dv50 - Dn50 value, greatly deviated from the ranges defined according to the present invention. Additionally, the average crystallite size and the a-axis lattice constant were smaller than those of the Examples. Consequently, the fraction of fines under a pressing pressure of 1.7 tonf/cm² exceeded 6.0%, which was markedly inferior to the Examples.

### Experimental Example 3: Evaluation of Electrochemical Characteristics of Lithium Secondary Battery

### (1) Evaluation of Initial Capacity and Initial Efficiency

After fabricating a half-cell lithium secondary battery, the cell was aged at 25°C for 10 hours, and then subjected to charge-discharge testing at 25°C. For the evaluation of initial capacity, the cell was charged at a constant current of 0.1C up to 4.4 V based on a reference capacity of 200 mAh/g, followed by constant-voltage charging until the termination current reached 0.05C. After charging, the cell was allowed to rest for 10 minutes, and then discharged at a constant current of 0.1C to 2.5 V based on the same reference capacity of 200 mAh/g.

### (2) Evaluation of High-Temperature Resistance Increase Ratio (45°C, 50 Cycles)

After fabricating a half-cell lithium secondary battery, the cell was charged at 45°C to 4.4 V at a constant current of 0.2C, followed by constant-voltage charging until the termination current reached 0.05C. After charging, the cell was allowed to rest for 10 minutes, and then discharged at a constant current of 1.0C to 2.5 V. Charge-discharge cycling was performed 50 times under these conditions, and the resistance increase ratio was calculated by comparing the resistance of the 50th cycle with that of the first cycle.

**[Table 3]**

| Sample | Initial Charge Capacity (mAh/g) | Initial Discharge Capacity (mAh/g) | Initial Efficiency (%) | Cycle-Life Characteristics (High-Temperature Resistance Increase Ratio, %) |
|---|---|---|---|---|
| Ex. 1 | 214.0 | 190.4 | 89.0% | 124.6% |
| Ex. 2 | 214.0 | 192.0 | 89.8% | 135.3% |
| Ex. 3 | 215.8 | 193.4 | 89.6% | 136.9% |
| Ex. 4 | 213.8 | 191.2 | 89.5% | 112.0% |
| Ex. 5 | 209.7 | 185.9 | 88.7% | 103.6% |
| Ex. 6 | 210.7 | 187.3 | 88.9% | 106.4% |
| C-Ex. 1 | 212.9 | 190.9 | 89.7% | 154.9% |
| C-Ex.2 | 213.7 | 193.6 | 90.6% | 138.5% |
| C-Ex.3 | 213.6 | 193.8 | 90.7% | 168.5% |

Referring to Table 3, it was confirmed that in the Examples, the overall particle-size-related properties, including the value of Dv50 - Dn50, were appropriately controlled within the ranges defined according to the present invention, and as a result, the cycle-life characteristics were significantly superior to those of the Comparative Examples. In contrast, in the Comparative Examples, the overall properties, including the value of Dv50 - Dn50, deviated from the ranges defined according to the present invention, and consequently, the cycle-life characteristics were considerably degraded compared to the Examples. This appears to be because the fraction of fines having a particle diameter of 1 µm or less under a pressing pressure of 1.7 tonf/cm² is proportional to the fraction of fines generated during electrode pressing, and by controlling this property, it is possible to suppress the generation of fines during electrode fabrication, thereby improving the cycle-life characteristics of the battery, particularly the high-temperature resistance increase ratio.

Meanwhile, it was confirmed that the capacity characteristics of the Examples and the Comparative Examples were substantially equivalent. From this, it can be seen that in the Examples according to the present invention, the overall particle-size-related properties including the value of Dv50 - Dn50 were properly controlled within the ranges defined herein, such that the cycle-life characteristics were improved without substantial deterioration of capacity characteristics.

The preferred embodiments of the present invention have been described above; however, the present invention is not limited thereto, and various modifications may be made without departing from the spirit or essential characteristics of the invention as defined in the appended claims, the detailed description, and the accompanying drawings. Therefore, the true scope of the present invention shall be defined by the appended claims and their equivalents.

## Claims

1. A positive electrode active material for a lithium secondary battery, comprising:
a single-particle lithium metal oxide containing from 50 mol% to 70 mol% of nickel based on a total mole of metals excluding lithium,
wherein the positive electrode active material satisfies Equations 1 and 2 below. $3.0 μm \leq Dv 50 \leq 5.0 μm$ $Dv 50 - Dn 50 \leq 2.0 μm$
In Equations 1 and 2, Dv50 is a volume-based average particle diameter of the lithium metal oxide, and Dn50 is a number-based average particle diameter of the lithium metal oxide.

2. The positive electrode active material of claim 1,
wherein the positive electrode active material satisfies Equation 3 below. $Dv 50 / Dn 50 \leq 2.0$
In Equation 3, Dv50 is a volume-based average particle diameter of the lithium metal oxide, and Dn50 is a number-based average particle diameter of the lithium metal oxide.

3. The positive electrode active material of claim 1,
wherein Dn50 is from 2.0 µm to 3.0 µm.

4. The positive electrode active material of claim 1,
wherein Dn10 of the lithium metal oxide is 1.0 µm or greater,
where Dn10 refers to a particle diameter corresponding to 10% of a cumulative number-based distribution of the lithium metal oxide.

5. The positive electrode active material of claim 1,
wherein the lithium metal oxide is in a single-particle form.

6. The positive electrode active material of claim 1,
wherein the lithium metal oxide has an average crystallite size of 255 nm or greater.

7. The positive electrode active material of claim 1,
wherein a lattice constant of an a-axis of the lithium metal oxide is 2.8751 Å or greater.

8. The positive electrode active material of claim 1,
wherein a fraction of fines having a particle diameter of 1 µm or less under a pressing pressure of 1.7 tonf/cm² is 3.0% or less.

9. The positive electrode active material of claim 1,
wherein the lithium metal oxide is represented by Chemical Formula 1 below:
[Chemical Formula 1] Liₐ[NiₓCo_{y}Mn_{z}M_{w}]O₂
where 0.8 ≤ a ≤ 1.2, 0.5 ≤ x ≤ 0.7, 0 ≤ y ≤ 0.2, 0 ≤ z ≤ 0.4, 0 ≤ w ≤ 0.2, and x + y + z + w = 1; and M is at least one element selected from Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, and combinations thereof.

10. A method for manufacturing a positive electrode active material for a lithium secondary battery, the method comprising:
preparing a metal precursor containing from 50 mol% to 70 mol% of nickel based on a total moles of metals;
mixing the metal precursor with a lithium raw material and performing a first calcination and a second calcination to form a lithium metal oxide; and
crushing the lithium metal oxide to form a single-particle lithium metal oxide,
wherein the first calcination and the second calcination are performed in an air atmosphere.

11. The method of claim 10,
wherein each of the first calcination and the second calcination is independently performed at a temperature of 900°C to 960°C.

12. The method of claim 10,
wherein a duration of the first calcination is shorter than a duration of the second calcination.

13. The method of claim 10,
wherein the first calcination is performed for 2 hours to 6 hours.

14. The method of claim 10,
wherein the second calcination is performed for 7 hours to 14 hours.

15. A positive electrode for a lithium secondary battery, comprising the positive electrode active material according to any one of claims 1 to 9.

16. A lithium secondary battery comprising the positive electrode of claim 15.
